# EUROPEAN PATENT SPECIFICATION

(11) **EP 2 465 594 B1**
(45) Date of publication and mention of the grant of the patent: **18.05.2016**
(21) Application number: 11194679.4
(22) Date of filing: 20.12.2011
(51) Int. Cl.: B01D 21/26, B01D 21/01, B01D 65/08, B03B 5/32, B03B 5/62, B04C 1/00, C02F 1/52, B01D 21/00, B01D 21/34, B01D 61/02, B01D 61/04, B01D 61/10, B01D 61/14, C02F 1/38, C02F 1/56, C02F 9/00, C02F 103/44, C02F 103/08

(54) **Systems and apparatus for seawater organics removal**
Systeme und Verfahren zur Entfernung von organischen Stoffen aus Meerwasser
Systèmes et appareil pour la séparation de composés organiques de l'eau de mer

(30) Priority: 20.12.2010 US 972684
(43) Date of publication of application: 20.06.2012
(73) Proprietor: Palo Alto Research Center Incorporated, Palo Alto, California 94304 (US)
(72) Inventor: Lean, Meng H., Santa Clara, CA 95054 (US); Zuback, Joe, Camarillo, CA 93012 (US); Chang, Norine E., Menlo Park, CA 94024 (US); Kole, Ashutosh, San Francisco, CA 94102 (US); Melde, Kai, San Francisco, CA 94117 (US); Seo, Jeonggi, Albany, CA 94704 (US)
(74) Representative: Gill Jennings & Every LLP

(56) References cited:
- EP-A1- 2 058 284
- EP-A2- 2 127 752

## Description

Biofouling causes severe problems to ships' hulls, coastal structures, industrial cooling towers and drinking water delivery systems. Use of the term "biofouling" herein refers to a build-up of biological organisms or a biofilm of such organisms on a surface such that the surface becomes encumbered and may even be degraded with respect to the useful purpose of the surface or structure. This problem occurs when biological organisms naturally present in the fluid source are entrained in the fluid taken into a filtration system inlet or intake. The build-up of a biofilm layer due to microbial growth, deposition of colloidal matter and adsorption of organics on reverse osmosis (RO), nanofiltration (NF) and ultrafiltration (UF) membrane surfaces leads to the deterioration of filtration efficiency and eventually the need to replace the membranes. Due to the foregoing, minimizing biofilm development and accumulation is a major concern in the desalination and water treatment industries.

Various strategies have been used to mitigate biofilm formation by increasingly effective pretreatment of source waters. For example, the addition of fine filtration devices, or the use of UV irradiation, may be employed to reduce fouling of the filtration components in a given system. Alternatively, the system may be enhanced by chemically modifying the membrane surfaces to inhibit microbial growth. However, these solutions can prove costly, and at least in the case of chemical modification may result in the chemicals used being released into the raw water supply and upsetting the ecological balance.

Phytoplankton, diatoms, and other organic species in the oceans are a source of biofouling and need to be mediated to minimize problems with downstream filtration systems. Extracellular polysaccharide secretions (EPS) serve as the precursor for the production of transparent exopolymeric particles (TEP) which play a decisive role in macro-aggregation processes. These gel-like particles appear in many forms; amorphous blobs, clouds, sheets, filaments or clumps, ranging in size from ∼2 to ∼200 µm. TEP are mostly polysaccharide, negatively charged, very sticky and are frequently colonized by bacteria. These aggregates foul membrane systems and serve as nutrients for biofilm growth.

Another problem for water and particularly seawater treatment systems is a seasonal event such as that known as "red tide", which is an algae infestation, or a harmful algae bloom (HAB). An occurrence, or harmful algae bloom, is generally defined as an occurrence having algae micro-organisms in an amount of 10⁶ cells/L or greater. Micro-organisms sometimes provide needed food or stimulate growth of other plant or animal life, thereby contributing to the food chain of the habitat. Other micro-organisms remove harmful or toxic matter from the habitat, resulting in the micro-organisms themselves becoming toxic. It may be necessary to remove such algae in order to eliminate them as a source of poison for other marine life, such as, for example, shell fish. Doing so without rupturing the cells of the micro-organisms becomes increasingly critical so as to avoid the release of toxins or other harmful matter that may contaminate the downstream filtration system, require special handling and/or disposal, and possibly contaminate the seawater habitat if the waste is to be returned to the source.

While it is desirable to remove the bio-fouling organisms from the filtration system, the need to do so must be balanced with the opposing need to do so without killing these bio-organisms which serve an important function in the ecological balance of the source water environment. Impingement of cellular material may lead to cell rupture, contamination of membranes, and dissemination of toxic cell material in the effluent waters.

Traditional practice has been to shut down filtration systems during harmful algae bloom or infestation periods, and to use this time to carry out regular maintenance. However, the infestation may cover large areas and the suspension of filtration operations severely impacts the ability to provide filtered water, whether for industrial use or even for human consumption.

Conventional large scale water treatment generally includes multi-stage filtration and sequential process steps, including for example coagulation, flocculation, and sedimentation. Typically, a minimum of two stages of filtration are employed, including coarse mesh filters, i.e., 2-3 mm mesh, at the inlet and smaller multi-media filters, i.e., 20-40 µm, further downstream for finishing. Most systems include additional intermediate filtering stages. Processing fluid through the system is not only time consuming, but costly as the filtration devices become fouled and require cleaning or replacement, resulting in system shut down.

Of particular interest herein is the use of membrane-less particle separation, such that the problems associated with bio-fouling are mitigated or even entirely eliminated. Several different types of membraneless particle separation devices having a generally spiral or curved configuration have been described in U.S. Patent Application Serial No. 11/606,460, filed November 30, 2006, entitled "Particle Separation and Concentration System," U.S. Patent Application Serial No. 11/936,729, filed November 7, 2007, entitled "Fluidic Device and Method for Separation of Neutrally Buoyant Particles," U.S. Application Serial No. 11/936,753, filed November 7, 2007 (EP 2 058 284 A1), entitled "Device and Method for Dynamic Processing in Water Purification," and U.S. Patent Application Serial No. 12/120,153, filed May 13, 2008, entitled "A Method and Apparatus for Splitting Fluid Flow in a Membraneless Particle Separation System", U.S. Patent Application Serial No. 12/120,093, filed May 13, 2008 (EP 2 127 752 A2), entitled "Fluidic Structures for Membraneless Particle Separation".

In general, such devices are useful in connection with particles having density differences compared with water, thus creating centrifugal or buoyancy forces necessary for transverse migration through the channel for purposes of separation. Some of these devices are also useful, depending on their configuration, to separate neutrally buoyant particles.

These types of separation devices provide for particle separation in a variety of manners. For example, depending on the flow rate, the particle separation may be driven by the centrifugal force or the pressure that is created by fluid flow through the channel. In any event, it is the objective of such devices to achieve particle separation. In this regard, homogeneously distributed particles at the inlet are separated into a band, or populated in a portion of the fluid stream, and diverted at the outlet into a first portion or band including selected particulates and a second portion without such particulates resident therein. U.S. Patent Application Serial No. 12/120,153, entitled "A Method and Apparatus for Splitting Fluid Flow in a Membraneless Particle Separation System," describes a variety of mechanisms and subsystems to enhance the splitting of the fluid flow at the outlet to provide enhancement for at least two outlet paths for the fluid.

Provided herein are designs and implementations for mechanisms and devices for off-shore or on-shore pre-treatment systems that are able to use hydrodynamic flow to separate entrained and suspended organics without using a filtration barrier. The resulting effluent stream may be pumped to shore (for off-shore systems) for filtration treatment while the waste stream is returned to the sea without adversely impacting the local ecology.

In one aspect of the presently described embodiments, the system comprises a non-filtration hydrodynamic seawater pretreatment system and method for the removal of bio-organisms, and particularly algae using the same, the system comprising an inlet screen in operative connection with a source of raw seawater, a first channel segment for receiving the raw seawater from the at least one inlet screen, a second channel segment for receiving the raw seawater from the first channel segment, the system arranged such that the fluid moves through the first segment until it is filled, at which time it spills over to the second channel; and a membrane-less hydrodynamic separator unit configured with an inlet to receive the raw seawater from the second channel segment, the membrane-less hydrodynamic separator including at least one separator module for removing bio-organic material from raw seawater, the separator module having a curved configuration comprising at least one curved portion that spans between 180 degrees and 360 degrees of angular distance along a diameter thereof, leading to a bifurcated outlet operative for passing pre-treated effluent to a downstream filtration system and for the removal of waste fluid, wherein the waste fluid is returned to the source and wherein the screened seawater is driven through the channel segments and the hydrodynamic separator by hydrostatic forces.

In at least one aspect of the foregoing, the pre-treated effluent stream contains less than 10% of the amount of bio-organic material contained in the raw seawater without the use of a coagulant and/or flocculant. With the use of a coagulant and/or flocculant, the residual bio-organic matter is less than 1%.

In another aspect of the presently described embodiments, there is provided a non-filtration hydrodynamic pre-treatment separator unit suitable for use in the pre-treatment of intake fluid to remove algae and other particulate matter there from prior to the fluid allowing the waste to be disposed off directly in the ocean rather than bringing them on-land to be treated and later disposed of.

In another aspect of the presently described embodiments, there is provided a non-filtration hydrodynamic pre-treatment separator unit suitable for use in the pre-treatment of intake fluid to remove algae and other particulate matter there from prior to the fluid being treated by a conventional RO or other water treatment system.

In another aspect of the presently described embodiments, there is provided a non-filtration hydrodynamic seawater pretreatment system, including a membrane-less hydrodynamic separator unit including at least one separator module for removing bio-organic material from raw seawater and suitable for implementation as a precursor to or a part of an off-shore or on-shore filtration system, wherein the system provides for pre-treating raw seawater to remove organics, i.e. algae, TEP, phytoplankton, diatoms, and other bio-organisms, without using a filtration barrier.

In another aspect of the presently described embodiments, the system provides a mechanism to minimize the impingement phenomenon that results when marine organisms are trapped against a conventional intake screen by the velocity and force of the fluid flow, causing cell rupture and releasing undesirable toxins or by-products to the environment.

In another aspect of the presently described embodiments, the system provides a rapid process for the removal of bio-organisms without the need for extended flocculation and/or sedimentation/floatation processes.

In another aspect of the presently described embodiments, the system provides an ecologically safe mechanism for maintaining the environmental balance of the source water while still removing potentially harmful algae from pre-treated seawater and returning the same intact to the environment.

In another aspect of the presently described embodiments, the non-filtration hydrodynamic seawater pretreatment system comprises a unit including a plurality of curved particle separation modules stacked such that the modules are parallel to one another and all of the modules are operatively connected to the inlet.

In another aspect of the presently described embodiments, the system comprises at least a second plurality of stacked curved particle separation modules arranged in parallel with the plurality of stacked curved particle separation modules.

In another aspect of the presently described embodiments, the system provides clean seawater such that filtration systems downstream of the pretreatment system suffer less clogging and require less maintenance.

In another aspect of the presently described embodiments, the system effectively and efficiently removes bio-organisms and nutrients (TEP), and thereby reduces bio-film formation and the associated affects thereof on costly membranes.

In another aspect of the presently described embodiments, minute bio-organisms that by-pass pre-filtration devices are prevented from entering the primary filtration device and fouling the same.
FIGURE 1 is a bar graph showing efficiency of conventional pretreatment system for bacteria and other organics removal;
FIGURE 2 is a graph showing results for removal of algae using the pretreatment device in a form of the presently described embodiments;
FIGURE 3 is a graph showing efficiency of a pretreatment device in a form of the presently described embodiments;
FIGURE 4 illustrates a general form of the presently described embodiment that does not use a coagulant and/or flocculant;
FIGURE 5 illustrates a general form of the presently described embodiment that uses a coagulant and/or flocculant;
FIGURE 6 illustrates a form of the presently described embodiments;
FIGURE 7 illustrates a form of the presently described embodiments;
FIGURE 8 illustrates a form of the presently described embodiments;
FIGURE 9 illustrates a form of the presently described embodiments;
FIGURE 10 illustrates a form of the presently described embodiments;
FIGURE 11 illustrates a form of the presently described embodiments;
FIGURES 12(a)-12(b) illustrate a form of the presently described embodiments; and
FIGURES 13(a)-13(e) illustrate a form of the presently described embodiments.

The presently described embodiments relate to various fluidic structures, implementations and selected fabrication techniques to realize construction of systems including membrane-less hydrodynamic pre-treatment separation units for the pre-treatment of raw seawater to remove bio-organic matter therefrom, and for returning the same, unruptured, to the raw seawater source without disturbing the ecological balance thereof. These contemplated systems provide for efficient input of fluid to be processed, and improved throughput. As used herein, the term "hydrodynamic pre-treatment separator" refers to the use of the hydrostatic force of the seawater environment, as well as gravitational force, to propel the seawater through the hydrodynamic pre-treatment separation system, including the hydrodynamic separator unit, without the need for using an external power source. However, this does not preclude the use of a pump for the device to operate.

It will be understood that variations of these systems and units may be realized based on dimensional scale and channel architecture. However, it is contemplated that the embodiments described herein will be highly scalable to span macro-scale (1-10 L/min) single-channel flow rates.

Planar embodiments utilizing convenient stacking techniques are contemplated. In this regard, hydrodynamic separator units having at least one module defining an arc in the range of 180 to 360 degrees allow for sequential stages of transverse flow pattern development, attainment of steady state flow velocity, and time for several circulatory passes to sweep particles to a desired position in the fluid flow. Other planar embodiments described herein include helical spirals.

The presently contemplated embodiments may be fabricated from inexpensive materials such as inexpensive plastics, or other suitable materials required for the treatment process.

In addition, a stacked parallel multi-channel embodiment provides for quick assembly and disassembly. Notable features of such a contemplated unit include convenient inlet manifolds and outlet manifolds that include a bifurcating mechanism or splitter to split the fluid into particulate or waste and effluent fluid streams. The contemplated embodiments also allow for a multiple stage device operative to output an extremely narrow band of particulates for further disposal or processing. Other parallel configuration embodiments and fabrication techniques therefore are contemplated.

Further, the membrane-less hydrodynamic pre-treatment separation units and configurations thereof provide for the introduction of coagulating or flocculating agents as part of the pre-treatment system, though the same are not required, and for the maintenance of the system, including a cleaning cycle. Also, a feedback and/or control system may be implemented with any of the presently described embodiments.

As has been noted above, the minimizing of bio-fouling, and particularly of bio-film development and accumulation is a major concern in the desalination and seawater treatment industries. The build-up of a bio-film layer due to microbial growth, deposition of colloidal matter, and adsorption of organics onto conventional filtration devices, such as RO, NF, and UF membrane surfaces, leads to deterioration of filtration efficiency and eventually to the need to replace fouled membranes.

One type of bio-fouling is that commonly referred to as "red tide". This phenomenon occurs, for example, in the South China Sea coastal waters, where in 1985 over 100 species of harmful algae were identified, and in 1993, 61 species of dinoflagellates, most commonly *Alexandrium tamarensis Balech, Ceratium furca, Gonyaulux polyhedral, Noctiluca scintillans,* and *Prorocentrum minimum* were identified (http://www.red-tide.org/new). For example, identified harmful algae include: in Malaysia, *Pyrodinium bahamense* var. *compressum;* in the Philippines, *Pyrodinium bahamense* var. *compressum, Gymnodinium catenatum, Alexandrium tamiyavanichii;* in Thailand, *Noctiluca scintillans, Ceratium furca, Trichodesmium erythraeum, Chaetoceros, Cosinodiscusss, Skeletonema, Mesodinium rubrum, Cochlodinium* sp.; in Vietnam, *Phaeocystis globosa;* and in Indonesia, *Skeletonema costatum, Chaetoceros, Bacterisastrum, Thalassothrix, Thalassionema, Rhizosolenia, Pseudonitszchia, Prorocentrum minimum, Gonyaulax* sp., *Trichodesmium erythraeum.*

While in some locations the red tide affect is periodical, in other areas harmful algae bloom (HAB) is present year-round. A HAB event is generally defined as an occurrence having algae micro-organisms in an amount of 10⁶ cells/L or greater. Micro-organisms sometimes provide needed food or stimulate growth of other plant or animal life, thereby contributing to the food chain of the habitat. Other micro-organisms remove harmful or toxic matter from the habitat, resulting in the micro-organisms themselves becoming toxic. It may be necessary to remove such algae in order to eliminate them as a source of poison for other marine life, such as, for example, shell fish. Doing so without rupturing the cells of the micro-organisms becomes increasingly critical so as to avoid the release of toxins or other harmful matter that may contaminate the downstream filtration system, require special handling and/or disposal, and possibly contaminate the seawater habitat if the waste is to be returned to the source.

Shear rate represents another concern with regard to the removal of micro-organisms that may be toxic or harmful. Of specific concern is the shear caused by passage of intake fluid through conventional membranes. The growth, reproduction and/or metabolism of the bio-organisms are known to be limited by turbulence. For example, it is known that *Protoceratium reticulatum* experience a reduced growth rate under turbulent conditions as compared to static conditions. At bulk average shear of 0.3/s over a 24 hour period, elevated production of chlorophyll, peridinin, and dinoxanthin, all antioxidants presumably generated to repair cell damage from shear, was noted and the growth rate was reduced. In addition to the strong inhibitory affects on cell culture rates of even low level shear, it may also fragment cell chains.

Shear rate during operation of some filtration systems may cause the rupture of bio-organism cell walls. This can be problematic in several ways. First, it may cause the release of toxic or infectious matter into the influent water. Also, the cellular matter causes further fouling of membranes and contact fluid surfaces, and again the cellular matter may be toxic or infectious, thus contaminating the fluid passing through the system. It is known that pressure drops of up to 200psi may rupture algae cells. Therefore, it is important that shear rate be controlled at a level below typical filtration operation shear rates, and specifically below that known to rupture algae so as not to cause the noted problems. Cell structures are different for different species, and thus shear rates should be sufficiently low for all. For example, diatoms (e.g. *Chaetoceros* and *Skeletonema*) generally have glassy silicates in their rigid cell walls, cyanobacteria and dinoflagellates (e.g. *Pyrodinium, Noctiluca,* and *Alexandrium*) have more cellulosic cell walls, and those known as "oilgae", or producers of oil, have very robust cell structures and require extreme compaction methods, such as pressure drop of about 150 psig, to extract the oil.

The membrane-less hydrodynamic pre-treatment separator system and units provided herein, however, operates in the shear rate range of 100/s to 1500/s, which is a couple of magnitudes lower than that necessary to rupture algae cell walls of any of the foregoing types or bio-organisms and most others that are similar. Therefore, the hydrodynamic pre-treatment separator system provided herein represents an acceptable alternative to conventional membrane filtration systems with regard to the problems caused by excessive shear.

Bio-organisms can vary in size and shape. For example, Table 1 set forth representative size and shape data for some of the bio-organisms noted herein. Of course, this data is provided as merely informative with regard to the type of bio-matter that the hydrodynamic pre-treatment separator system in accord herewith is intended to remove.

**TABLE 1**

| MICRO-ORGANISM | SHAPE | AVERAGE SIZE |
|---|---|---|
| *Pyrodinium bahamense* var. *compressum* | spherical | 41.9 µm long and |
| | | 43.8 µm wide |
| *Gymnodinium catenatum* | (a) circular or squarish cells; | (a) 38-53µm long and 33-45µm wide; |
| | (b) spherical cysts; | (b) 45-50µm; |
| | (c) chains | (c) 32-64 cells/chain |
| *Skeletonema costatum* | tube-like cell chain | 2-21 µm |
| *Trichodesmium erythraeum* | cells that form colonies that appear as bundles of filaments | 2-3 mm thick |
| *Noctiluca scintillans* | spherical | 200 µm to about |
| | | 2 mm diameter |
| *Chaetoceros gracilis* | tube-like cells | 200-900 µm long |

The bio-organisms may represent a danger to marine life. For example, *Chaetoceros debilis* has silica cell walls and has a loosely spiraled appearance. This bio-organism becomes entrapped in the gill tissue of fish, causing the generation of copious amounts of mucous which eventually suffocate the affected fish.

In light of the foregoing, there is an obvious need to prevent harmful algae blooms from occurring and for the removal of harmful bio-organisms from sources of seawater. Attempts have included minimizing runoff from agricultural areas and fertilized fields, decreasing exposure to light, dosing infested water with gypsum or alum, pretreatment of the water source with algaecide, and treatment of ballast water to prevent cyst transplantation of new algal species. In addition, it is known to treat filtered water prior to use by the addition of a flocculating agent such as clay, i.e. montmorillonite, kaolinite, or yellow loess. This treatment, however, tends to increase the cell mortality rate. With regard to larger infestations, for example coastal red tide blooms, the most commonly used treatment is unfortunately no treatment at all, i.e. the bloom is left to disappear on its own. This results in expensive repair and maintenance that may lead to extended downtime of seawater filtration systems.

Extracellular polysaccharide secretions (EPS) serve as the precursor for the production of transparent exopolymeric particles (TEP), which include the foregoing examples and many other species, and which play a decisive role in macro-aggregation processes. These gel-like particles appear in many forms, including amorphous blobs, clouds, sheets, filaments or clumps, ranging in size from ∼2 to ∼200 µm. TEP are mostly polysaccharide, negatively charged, very sticky and are frequently colonized by bacteria. These aggregates foul membrane systems and serve as nutrients for bio-film growth.

Conventional membrane filtration devices, at normal operating flow rates, are likely to deform or shred the TEP into smaller fragments, but are unlikely to readily remove the TEP. Thus, it remains as a basis for further growth of the bio-film. Similarly, the use of sediment traps causes the TEP, which is mucous-like, to accumulate with sediments as a viscous sludge that complicates handling and disposal. Notwithstanding the foregoing, there is a need to return bio-organisms to the source water unaltered, based on the fact that the TEP represent a food source for small filter-feeding protozoans (e.g. *Appendicularia* and *Euphausia pacifica*), and for larval stage organisms, copepods, and some fish. Finally, due to the fact that certain bacteria may preferentially feed on and degrade TEP that contain more mannose or galactose, the concentration, removal and return of this type of TEP represents a potential ecological shift in the environmental. The release of hazardous or nuisance grade byproduct gases may also become problematic in this situation. Therefore, there is an obvious need to balance the removal of harmful algae with the need to return bio-organisms to the source seawater unaltered.

In one aspect of the current invention there is provided a membrane-less hydrodynamic pre-treatment separator system, suitable for implementation in an off-shore or on-shore environment, for pre-treating seawater to remove bio-organics, i.e. algae, TEP, phytoplankton, diatoms, and other bio-organisms, without using a filtration barrier. Removed bio-organic material may be returned to the source water or may be disposed of as needed. The membrane-less hydrodynamic pre-treatment separator system provided is ecologically friendly in several regards, i.e., it does not require the use of toxic or harmful chemicals or release the same to the environment; it provides for the return of waste cleaned from the raw seawater to the shore for disposal or further treatment, to the intake source for further treatment, or back to the source water; it operates on hydrodynamic force generated by the fluid flow through the system; and, if necessary, it provides for the use of a biocompatible and biodegradable organic flocculent, such as chitosan, made from the chitan of shells, as a separation enhancer. Raw seawater may be prescreened to remove large particulate matter.

In another aspect of the current invention there is provided a membrane-less hydrodynamic pre-treatment separator system that effectively and efficiently removes bio-organisms and nutrients (TEP), and thereby reduces bio-film formation and the associated affects thereof on costly membranes of downstream filtration systems. In this regard, use of the pre-treatment system provided results of at least an 80% reduction in bio-organics and TEP in the intake fluid, and preferably of at least a 90% reduction, thus providing for a five-fold increase in the useful life of downstream membrane and RO systems prior to cleaning and even longer to eventual replacement. Due to the high efficiency of the pretreatment system with regard to particulate removal, i.e. on the order of 95%, the intake fluid fed to downstream desalination or other operations is of a higher quality, thus enhancing the performance and efficiency thereof.

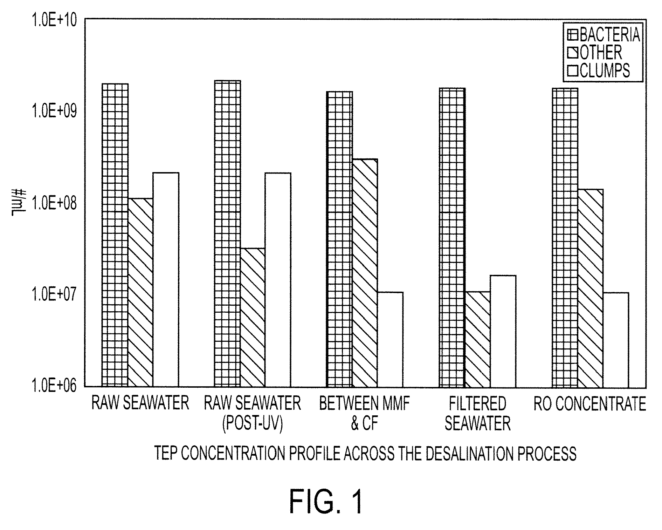

Figure 1 is a bar graph showing the amount of bacteria, clumped particulates, and other particulates in raw seawater, and in post-treatment effluent treated by conventional filtering devices, including UV irradiation, MMF and CF, conventional filtering mesh and RO. No treatment method tested provided a noticeable reduction in bacteria, which includes the bio-organisms that are the focus of the current system.

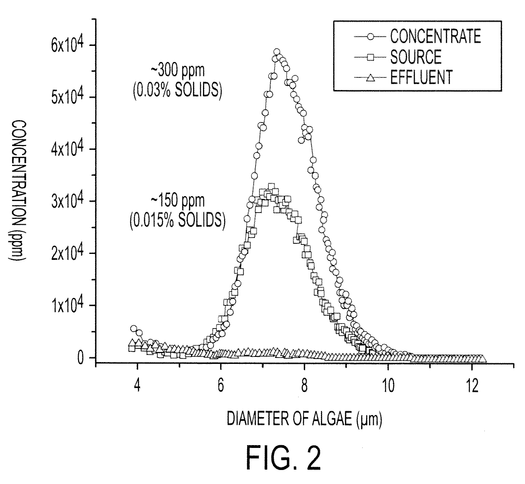

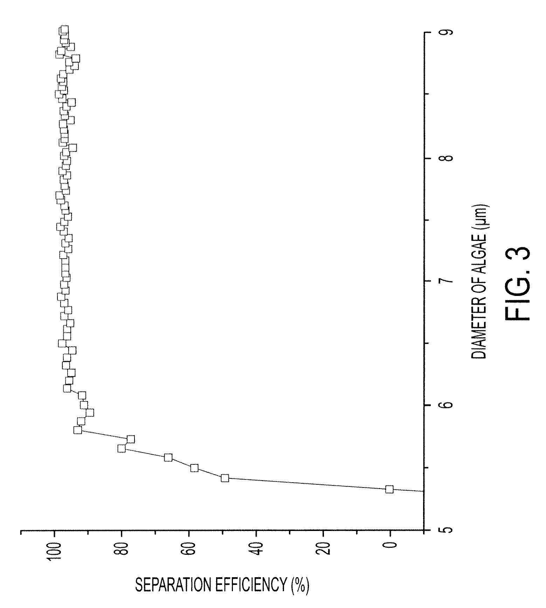

In contrast, Figure 2 provides a graph showing the concentration in ppm (parts/million) of algae greater than 6 µm in diameter in raw seawater, in the waste stream and in the effluent stream of a membrane-less hydrodynamic pre-treatment separator system in accord with at least one aspect of the current invention. Figure 3 further details the effectiveness of the current system in a graph showing the system to operate with 95% efficiency with regard to the removal of algae having a diameter of greater than about 6 µm.

In the following discussion, in which various embodiments are discussed with respect to the Figures, it is understood that like numbers may be used to refer to like components or portions of the Figures. Further, it is understood that though a certain size or type of device may be shown, unless otherwise stated other similar devices or features may be substituted so long as the intended result of the operating system is achieved.

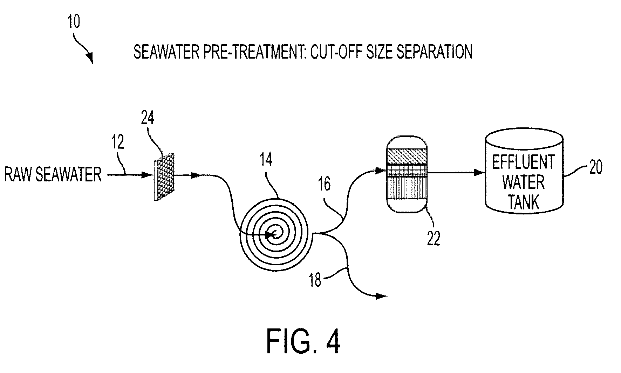

With reference now to Figure 4, a general embodiment to pre-treat raw seawater for desalination is shown for cut-off size separation. With this type of pre-treatment, particulate matter having a certain particle size or larger is removed by the separator. Shown then is seawater treatment system 10 having a raw seawater intake 12 passing fluid to a spiral separation unit. Separator 14 includes a bifurcated outlet (not shown) having an effluent stream 16 operatively connected to effluent water tank 20 and a waste stream 18, laden with removed particulate matter, which transports the waste stream for disposal or storage (not shown). Optional filter 22 may be added to fine filter the effluent stream. In this system 10, pre-treatment filter 24 is an 80 mesh screen filter, though any suitable screen filter is contemplated as part of this system.

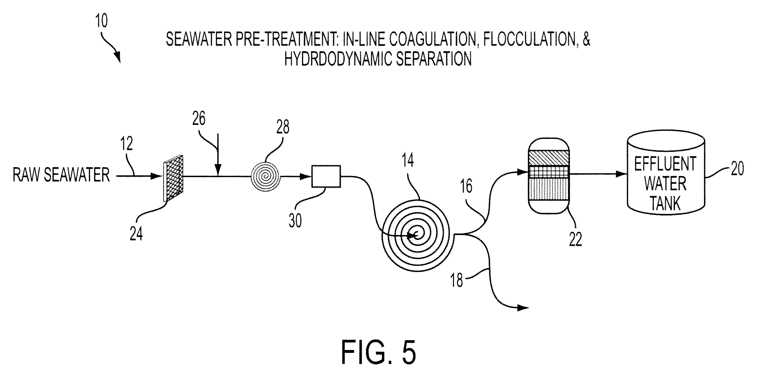

Figure 5 provides another general embodiment to pre-treat raw seawater for desalination 10, including raw water inlet 12 through mesh screen filter 24, spiral separator 14, and then through either effluent stream 16 and optional filter 22 to effluent tank 20 or through waste stream 18 to storage or disposal (not shown). In addition, in this embodiment there is provided coagulant and/or flocculant injection device 26, spiral mixer 28 to facilitate aggregation of the coagulant and/or flocculant and particulate matter remaining in the rough filtered seawater, and aggregation tank 30 where the coagulated particulate matter is further combined with a flocculating agent. The addition of these latter units is intended to aid in removal of particulate matter by creating larger particles that are more easily removed by spiral separator 14.

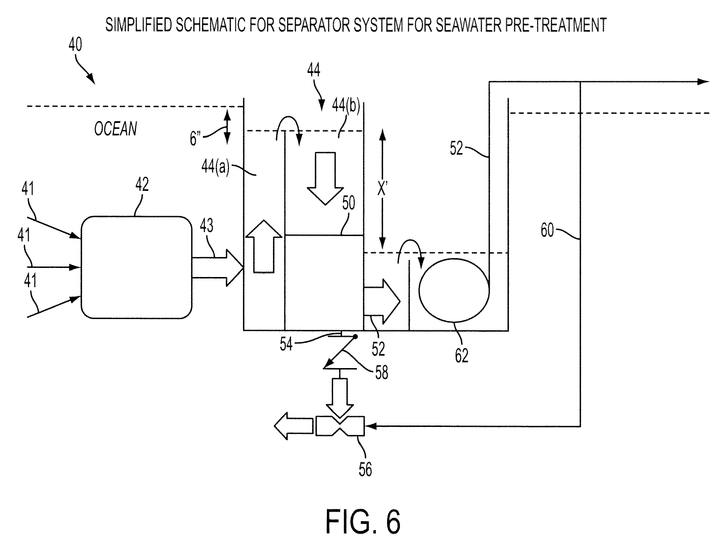

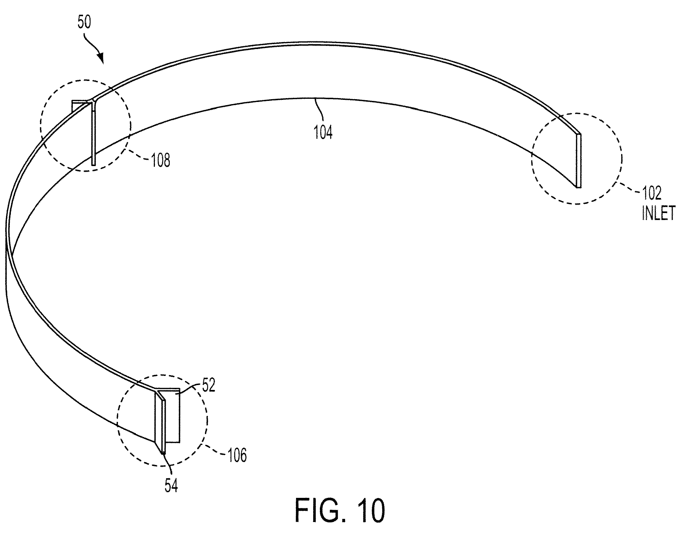

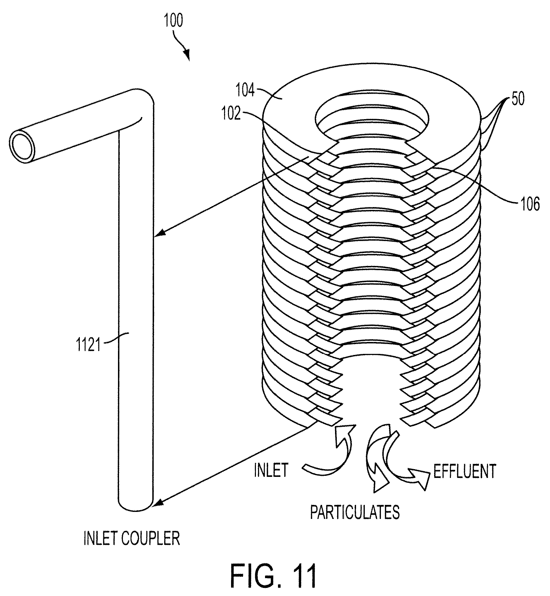

In at least one aspect of the current invention, there is provided a simplified non-filtration hydrodynamic pre-treatment separator system for the pre-treatment of raw seawater, for example as set forth in Figure 6, that avoids the problems presented by source water containing large amounts of harmful algae and other bio-organisms. In the hydrodynamic pre-treatment separator system 40 shown in Figure 6, raw seawater 41 enters and passes through inlet screen 42 by gravitational force. Screen 42 removes larger particulate matter, for example having a size of about 2 to 3 mm and above. The raw screened seawater 43 then flows toward hydrodynamic separator unit 50 through channel 44, which has segments 44(a) and 44(b). Fluid first enters and moves through segment 44(a) until it is filled, at which time it spills over into segment 44(b). The screened seawater 43 is driven through channel 44 by hydrostatic forces, which further force the screened raw seawater into and through hydrodynamic separator unit 50, which includes at least one non-filtration, membrane-less separator module in accord with that shown in, for example, Figure 10 or 11 hereof. The hydrodynamic separator module functions to remove bio-organisms from the screened raw seawater in advance of the further filtration thereof by downstream filtration operations or systems.

Fluid flow through the hydrodynamic pre-treatment separator system 40 is in this and some other embodiments maintained by eductor pump 56. Eductor pump 56, in operative communication with check valve 58, receives effluent from effluent line 52 through line 60. As effluent from line 60 enters eductor pump 56 it creates a vacuum, drawing screened raw seawater into separator unit 50 and waste there from through check valve 58. This vacuum offsets the drop in pressure from separator unit inlet side in channel 44(b) and outlet side where effluent line 52 emerges, and maintains the flow of raw screened seawater into and removal of effluent from separator unit 50.

Seawater that has been pre-treated for removal of bio-organics that cause bio-fouling of downstream membranes exits hydrodynamic separator unit 50 as a bifurcated outlet stream, including effluent stream 52 and waste stream 54. Effluent stream 52 may be transported by an appropriate means, at low pressure, for further filtration in a downstream filtration operation on-shore or off-shore. Alternatively, depending on the end use requirements, effluent stream 52 may be used as is or contained for subsequent use. Optionally, a submersible pump 62 may be employed to facilitate pumping effluent stream 52. Check valve 58 in operative communication with hydrodynamic separator unit 50 releases larger algae, such as those types consistent with red tide events, and other larger particulate matter as part of waste stream 54. The waste product from waste stream 54 may be returned to the ocean so as not to upset the ecological balance, or may be disposed of in an appropriate manner, as disclosed herein.

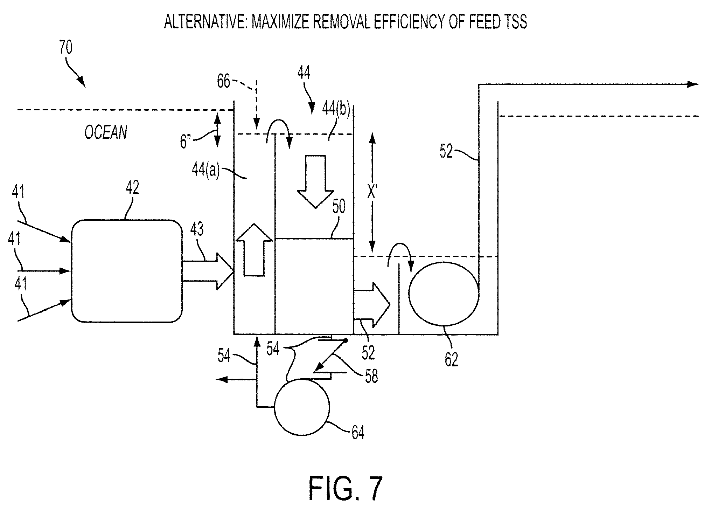

Figure 7 presents another aspect in accord with the current disclosure, wherein a coagulant and/or flocculant is added to maximize the efficiency of the waste removal process when the size of the algae to be removed is known to be very small, for example on the order of less than about 5 µm. In this instance it may be desirable to enhance the efficiency of the hydrodynamic pre-treatment separator system by the addition of a coagulating agent. In this embodiment, raw seawater 41 enters hydrodynamic pre-treatment separator system 70 through inlet screen 42 by gravitational force. The raw screened seawater 43 then flows toward hydrodynamic separator unit 50 through channel 44, which has segments 44(a) and 44(b). Fluid first enters and moves through segment 44(a) until it is filled, at which time it spills over into segment 44(b). Sufficient detention time is allowed for coagulation and/or flocculation prior to feeding into the hydrodynamic separator. The raw screened seawater 43 is driven through channel 44 by hydrostatic forces, which further force the screened seawater into and through hydrodynamic separator unit 50, which includes at least one non-filtration, membrane-less separator module in accord with that shown in, for example, Figure 10 or 11 hereof. The hydrodynamic separator functions to remove bio-organisms from the screened seawater in advance of the further filtration thereof by downstream filtration operations or systems.

At this point, coagulant and/or flocculant 72, such as chitosan, is added to the screened seawater 43 in channel 44 by any suitable means for doing so. Chitosan, comprising crushed shells, is exemplified here as an appropriate coagulant and/or flocculant because it maintains the environmentally friendly aspect of the system. Of course, any appropriate coagulant and/or flocculant may be used. The coagulated screened seawater is circulated through hydrodynamic separator unit 50 by hydrodynamic force. The fluid stream is bifurcated before exiting separator 50 into an effluent stream 52 and a waste stream 54. In this embodiment, waste stream 54 is removed through check valve 58, which is in operative communication with separator unit 50 through waste line 54, and can then be returned to channel 44(a) for combination with raw screened seawater 43 to assist in increasing the particle size of the bio-organisms that the pre-treatment is intended to remove, along with coagulant and/or flocculant 66. In the alternative, if it contains larger size waste it can be removed to shore for disposal or containment. Pump 64 may optionally be added to the system to assist with moving waste stream 54. Effluent stream 52 is transported by an appropriate means at low pressure for further filtration in a downstream filtration operation on-shore or off-shore. Alternatively, depending on the end use requirements of the cleaned seawater, effluent stream 52 may be used or contained for subsequent use. Optionally, a submersible pump 62 may be employed to facilitate pumping effluent stream 52.

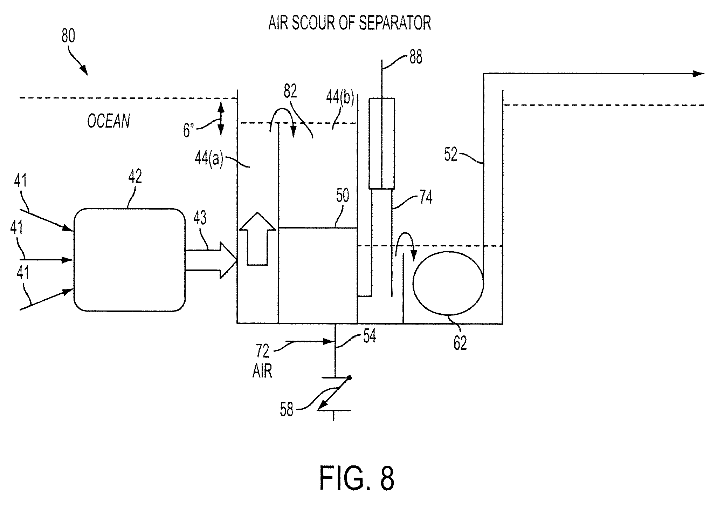

In another aspect in according with the current disclosure, the hydrodynamic pre-treatment separator system 80 includes a forced air cleaning cycle. With regard to Figure 8, raw seawater 41 enters hydrodynamic pre-treatment separator system 80 through inlet screen 42 by gravitational force, and travels through channel 44 to hydrodynamic separator 50 in accord with the disclosure provided above. The fluid stream is bifurcated before exiting separator 50 into an effluent stream 52 and a waste stream 54. In this embodiment, as the hydrodynamic separator 50 becomes fouled, system 80 may be shut down briefly, and air forced into hydrodynamic separator unit 50 through waste stream line 54 positioned upstream of check valve 58. Air stream 72 enters hydrodynamic separator unit 50 through waste stream 54 by the force of a blower or other such device connected to an air supply (not shown), dislodging scrubbed solids/waste from hydrodynamic separator unit 50, the dislodged solids/waste accumulating above separator 50 in head space 82 of channel segment 44(b). In that scenario where hydrodynamic separator unit 50 includes a plurality of stacked modules, as shown for example in Figure 11, the air scouring will be done sequentially. As such, each module will include an air inlet and an on-off valve to control the sequential cleaning of the modules. As each module is cleaned, dislodged solids/waste will accumulate in head space 82.

Once hydrodynamic separator unit 50 is clean, air stream 72 is turned off, and system 80 is once again subject to the hydrodynamic force of the seawater in the system, which causes raw seawater 41 to again flow through screen 42, through channel 44 and into hydrodynamic separator unit 50. As the screened seawater moves through channel 44, the dislodged solids are picked up and carried back into hydrodynamic separator unit 50 for removal as part of waste stream 54. Loop seal 74 is in this scenario a portion of effluent stream line 52 and is operatively associated with hydrodynamic separator unit 50 to prevent air from the cleaning cycle from exiting the effluent stream 52. As such, loop valve 74 is positioned below the water line and includes air vent 88 for the discharge of accumulated air above sea level. Waste stream 54 is removed through check valve 58 and disposed of or re-used in accord with any of the foregoing embodiments. Similarly, effluent stream 52 is transported by an appropriate means at low pressure for further filtration in a downstream filtration operation on-shore or off-shore, or for use or storage in accord with any other embodiment hereof.

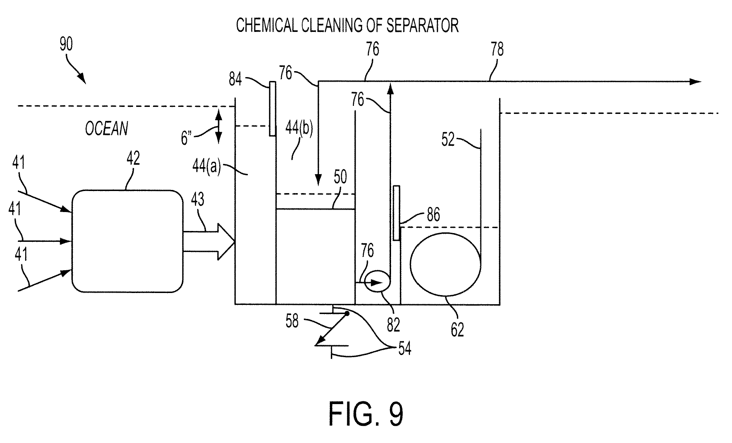

In an alternative to the foregoing air cleaning cycle, a chemical cleaning cycle may be used with the hydrodynamic pre-treatment separator system disclosed in any of the embodiments provided herein. Figure 9 provides an example of such a cleaning cycle. In this embodiment, hydrodynamic pre-treatment separator system 90 receives raw seawater 41 through inlet screen 42 by gravitational force. The screened seawater 43 then flows through channel 44 (a) and (b) to hydrodynamic separator unit 50, where the hydrodynamic force of the screened seawater 43 moves the fluid through the non-filtration, membrane-less separator unit 50 for the removal of bio-organisms, in accord with any of the foregoing aspects. The stream 43 is circulated through hydrodynamic separator unit 50 where bio-organisms are removed and the stream is bifurcated before exiting hydrodynamic separator unit 50 into an effluent stream 52 and a waste stream 54.

In this aspect, as the hydrodynamic separator unit 50 becomes fouled, system 90 may be shut down briefly for a cleaning cycle. Upon shut down, weir gates 84 and 86 on weir overflows (not shown) drop to prevent the ingress of raw seawater or clean effluent into the hydrodynamic separator unit 50. Cleaning fluid, charged to hydrodynamic separator unit 50 by any suitable means for doing so, is recirculated through hydrodynamic separator unit 50 by pump 82 through line 76. For example, cleaning fluid might be pumped from a fluid storage tank or other containment on-shore, or may be stored on the support mechanism housing/supporting system 90, for example a platform. In either instance, it may be fed to the system 90 by, for example, gravity, and recirculated by dedicated pump 82. Weir gates 84 and 86 prevent the cleaning fluid circulating through hydrodynamic separator unit 50 from escaping into either effluent line 52 or into channel 44(b). Once the cleaning cycle is complete, a valve (not shown) may be used to close off the cleaning fluid inlet and force spent fluid out through line 78 for disposal, for example on-shore.

Optionally, the cleaning fluid may be supplemented by an air stream, such as that shown in Figure 8. In one alternative, aeration alone is used to recirculate the cleaning fluid through hydrodynamic separator unit 50. The cleaning fluid is prevented from entering the source water and seawater is prevented from back-flowing into hydrodynamic separator unit 50 during the cleaning cycle by the hydraulic head differential between the screened seawater 43 in channel 44(a) on the intake side of weir gate 84 and that in channel 44(b) on the opposite side of weir gate 84 where fluid enters hydrodynamic separator unit 50. During cleaning, check valve 58 functions to assist in retaining the cleaning fluid within hydrodynamic separator unit 50 and keeping it from exiting the system through waste stream 54.

Upon completion of the cleaning cycle, pump 82 is stopped and system 90 is re-activated. At this time, weir gates 84 and 86 are raised and fluid again moves through hydrodynamic pre-treatment separator system 90, and waste stream 54 is removed through check valve 58 and disposed of or re-used in accord with any of the foregoing embodiments. Similarly, effluent stream 52 is transported by an appropriate means at low pressure for further filtration in a downstream filtration operation on-shore or off-shore, or for use or storage in accord with any other embodiment hereof.

Membrane-less hydrodynamic separator unit 50 contemplated for use herein may take the form of any separator. For example, though not intended to be in any way limiting, Figure 10 provides a representation of an example hydrodynamic separator unit suitable for use herein. Figure 10, then, sets forth an example of a suitable hydrodynamic separator unit 50, in keeping with the definition provided above, having an inlet 102 (which may include an inlet coupler for stacked arrangements), curved portion 104, and at least one bifurcated outlet 106 defining an effluent stream 52 and a waste stream 54. As shown, there may be provided an additional outlet 108 for selected particles such as particles of a particular size or density (e.g. buoyant particles). The outlet 108 is positioned midway around the curve portion 104 between inlet 102 and outlet 106. As above, at least one outlet coupler may also be utilized. Depending on the seawater water quality, i.e. particulate concentration and size distribution, hydrodynamic separator unit 50 will collect all of the particulates into a band of different widths. In order to allow optimization of the efficiency of the hydrodynamic separator in real time, it is desirable to have an adjustable stream splitter (not shown). It is understood that hydrodynamic separator unit 50, as shown in this Figure 10 may be a single module or a plurality of parallel stacked modules, as shown in more detail in Figure 11.

Figure 11 provides a representation of a stacked arrangement including a plurality of modules 100 in hydrodynamic separator unit 50, for example of the type shown in Figure 10. With reference to Figure 11, a stacked hydrodynamic separator unit 50 comprises multiple planar hydrodynamic separator modules 100 (e.g. fractional arc segments) that are vertically stacked as parallel channels to increase throughput. These hydrodynamic separator modules do not complete a loop for any one module 100, although the characteristics and functions of a spiral device will nonetheless apply to these stacked separator modules in this case. The hydrodynamic separator modules 100 each comprise an inlet 102, curved or arc section 104 and an outlet 106. Also shown in Figure 11 is an inlet coupler 112 that allows for an inlet of seawater from a common source to each hydrodynamic separator module 100 shown. It should be appreciated that the inlet coupler may take a variety of forms. In one form, the inlet coupler is a cylinder and has perforations or a continuous slot corresponding to the inlet of each hydrodynamic separator. The hydrodynamic separator unit 50 provides for increased throughput for fluid particle separation. At least one outlet coupler (not shown) may also be implemented. The outlet coupler(s) could resemble the inlet coupler, for example.

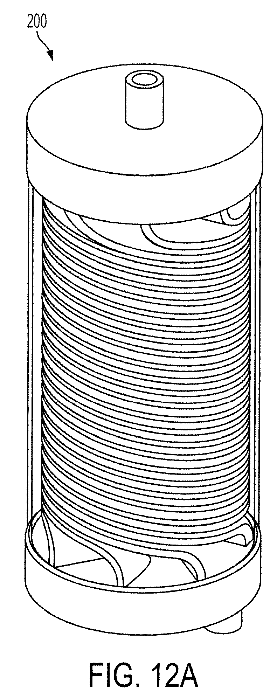

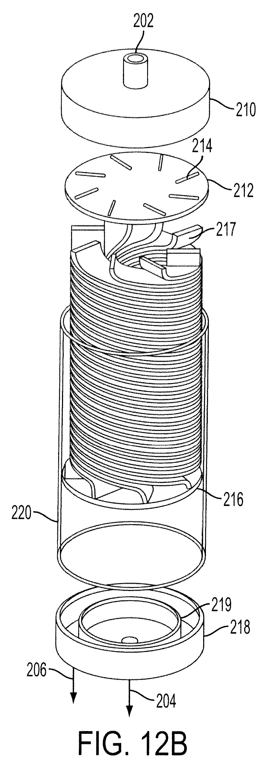

Figures 12(a) - (b) illustrate a further embodiment of the presently described embodiments. As shown in Figure 12(a), a hydrodynamic separator unit 200 includes eight parallel hydrodynamic separator modules in a helical spiral arrangement. This embodiment provides for improved throughput due to the compact configuration, as shown in the exploded view of Figure 12(b).

In operation, raw seawater enters the hydrodynamic separator unit 200 through an inlet 202 and exits (separated) through outlet paths 204 and 206. An upper fluidic manifold 210 feeds the eight separate hydrodynamic separator modules 217 through the respective radially skewed slots 214 on an end cap 212. A lower end cap 216 has slots corresponding to each hydrodynamic separator module as well. An outlet manifold 218 includes an inner ring 219 which acts as the bifurcator to split the separated fluid into waste and effluent streams, 204 and 206. The helical spiral structure formed by the hydrodynamic separator modules 217 fits within an external protective sleeve 220. Each individual hydrodynamic separator module may optionally have individual flow control at inlet or outlet to stop the flow.

Any of the foregoing embodiments may be used alone or as part of a stacked and/or packed arrangement. By this is meant that the hydrodynamic separator unit 50/200 may include a plurality of hydrodynamic separator modules arranged in parallel, planar fashion using convenient stacking techniques, for example creating a tower. Similarly, the unit may include multiple stacks or towers packed together using convenient packing techniques.

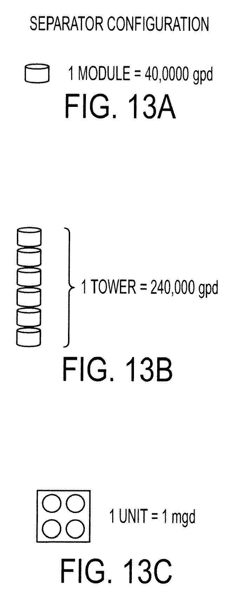

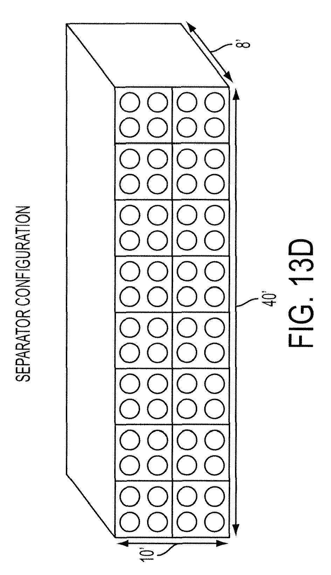

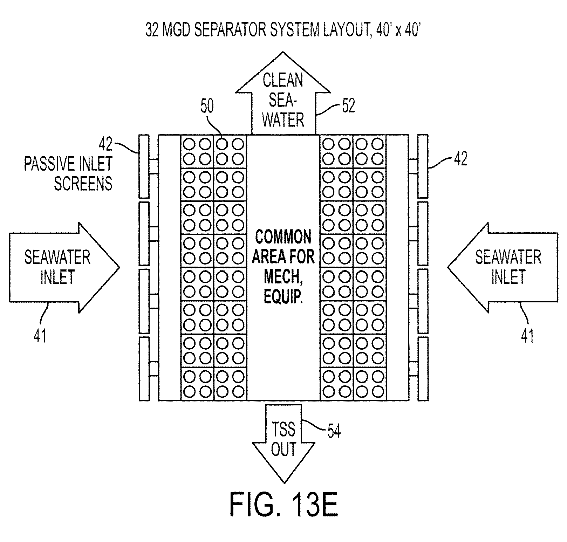

Figure 13(a)-(e) provide an illustration depicting how the throughput and separation capacity of the disclosed aspects may be amplified. For example, Figure 13(a) represents a single hydrodynamic separator module that may be used to pre-treat raw seawater, prior to conventional filtration, in accord with any of the foregoing aspects. It is anticipated that one such module may treat 40,000 gallons of raw seawater per day. As shown in Figure 11, a plurality of modules may be stacked in planar relationship, and form a tower such as that depicted in Figure 13(b). In Figure 13(b), the tower includes 6 modules. This is merely exemplary, however, and more or less may be used. Using 6 modules, of the type shown in Figure 13(a), the hydrodynamic pretreatment separator system may clean, for example, a throughput of 240,000 gallons per day. Figure 13(c) contemplates the positioning of 4 towers of the type shown in Figure 13(b) within a single, closely packed arrangement, i.e. a 1 MGD hydrodynamic separator unit, for example retained or positioned on a skid or other base support. In such an arrangement, for example, each tower may have a diameter of about 2 feet. In this exemplary arrangement, each tower includes 6 stacked modules, wherein each module has a flow throughput of 100 liters per minute. Based on this, the skid, having an overall footprint of only 5 feet by 5 feet, has a throughput capacity of 1 million gallons per day (MGD). Finally, Figure 13(d) provides a schematic for an assembly including 16 such units or skids, and thus representing a cleaning capacity of 16 MGD. Figure 13(e) expands upon this further, including 32 units and having a separation capacity of 32 MGD. In Figure 13(e), raw seawater 41 passes through inlet screens 42 on either side of the 32 unit system. The screened seawater then circulates through hydrodynamic separator units 50, generating effluent and waste streams that are combined such that effluent stream 52 and waste stream 54 exit on opposite sides. In one embodiment, a common area may be included, for example to house various pumps, cleaning devices, mechanical equipment, and valves in accord with any of the aspects disclosed herein.

In one embodiment, there is provided a mechanism to minimize the impingement phenomenon that results when marine organisms are trapped against a conventional intake screen by the velocity and force of the fluid flow, the mechanism comprising a non-filtration hydrodynamic pretreatment separation system including at least one inlet for receiving raw seawater, and a non-filtration barrier hydrodynamic separator unit for removing bio-organic material from raw seawater based on fluid flow dynamics, the separator unit including at least one module having a curved configuration that causes marine organisms to be concentrated into bands within the module prior to being removed from the system as part of a waste stream, thereby eliminating cell rupture and the release of undesirable toxins or by-products to the raw seawater environment. The bands within the separator unit may include at least effluent stream which, upon removal from the separator unit, contains less than 10% of the amount of bio-organic material contained in the raw seawater without the use of a coagulant and/or flocculant.

## Claims

1. A seawater pretreatment system for the removal of bio-organic material from a source of raw seawater, the system comprising:
at least one inlet screen (42) for receiving raw seawater (41);
a first channel segment (44(a)) for receiving the raw seawater from the at least one inlet screen;
a second channel segment (44(b)) for receiving the raw seawater from the first channel segment, the system arranged such that the fluid moves through the first segment until it is filled, at which time it spills over to the second channel;
a membrane-less hydrodynamic separator unit configured with an inlet to receive the raw seawater from the second channel segment, the membrane-less hydrodynamic separator including at least one separator module (50) for removing bio-organic material from the raw seawater, the separator module having a curved configuration comprising at least one curved portion that spans between 180 degrees and 360 degrees of angular distance along a diameter thereof, leading to a bifurcated outlet operative for passing treated effluent (52) to a downstream filtration system and for the removal of waste fluid (54); the system being arranged so that the screened seawater is driven through the channel segments and the hydrodynamic separator by hydrostatic forces; and
a means for returning the waste fluid to the source (56).

2. The system according to claim 1, wherein the system further includes a source of at least one of a coagulant and a flocculant.

3. The system according to any preceding claim, wherein the hydrodynamic separator unit includes a plurality of curved particle separation modules stacked such that the modules are parallel to one another and all of the modules are operatively connected to the inlet.

4. The system according to claim 3, wherein the separator unit includes at least a second plurality of stacked curved particle separation modules arranged in parallel with the plurality of stacked curved particle separation modules, preferably wherein the separator unit includes 4 towers in a close packed configuration forming a single operating unit.

5. The system according to claim 4, wherein the separator unit includes 6 stacked parallel separator modules in a tower configuration, preferably wherein the separator unit includes 4 towers in a close packed configuration forming a single operating unit.

6. The system according to claim 5, wherein the separator unit includes a plurality of operating units in close packed configuration.

7. The system according to any preceding claim, whereby the system is implemented as a pretreatment system for an on-shore or off-shore filtration system.

8. A method for pre-treating seawater comprising:
providing a hydrodynamic pretreatment separation system for the removal of bio-organisms from a source of raw seawater;
circulating the raw seawater through the hydrodynamic pretreatment separation system to render an effluent stream and a waste stream;
passing the effluent stream to the seawater filtration system which is downstream of the hydrodynamic pretreatment separation system; and
filtering the effluent stream to remove remaining waste;
such hydrodynamic pretreatment separation system including:
at least one inlet screen (42) for receiving raw seawater (41); and
a first channel segment (44(a)) for receiving the raw seawater from the at least one inlet screen;
a second channel segment (44(b)) for receiving the raw seawater from the first channel, wherein the fluid moves through the first segment until it is filled, at which time it spills over to the second channel;
a membrane-less hydrodynamic separator unit configured with an inlet to receive the raw seawater from the second channel segment, the membrane-less hydrodynamic separator for removing bio- organic material from the raw seawater, the separator unit including at least one module (50) having a curved configuration comprising at least one curved portion that spans between 180 degrees and 360 degrees of angular distance along a diameter thereof, leading to a bifurcated outlet for
rendering the effluent stream (52) and the waste stream (54), wherein the waste stream is returned to the source (56) and wherein the screened seawater is driven through the channel segments and the hydrodynamic separator by hydrostatic forces.

9. The method according to claim 8, further comprising introducing at least one of a coagulant and a flocculant to the hydrodynamic pretreatment separation system.

10. The method according to claim 8 or claim 9, wherein the bio-organic material comprises phytoplankton, algae, diatoms, seawater organisms, and TEP.

11. The method according to any of claims 8 to 10, wherein the hydrodynamic pretreatment separation system operates in the shear rate range of 100/s to 1500/s.

12. The method according to any of claims 8 to 11, wherein the separator unit including at least one module having a curved configuration causes marine organisms to be concentrated into bands within the module prior to being removed from the system as part of a waste stream, thereby eliminating cell rupture and the release of undesirable toxins or by-products to the raw seawater environment.

## Patentansprüche

1. Meerwasser-Vorbehandlungssystem für die Entfernung von bioorganischem Material aus einer Quelle von unbehandeltem Meerwasser, wobei das System umfasst:
wenigstens ein Einlasssieb (42) zum Aufnehmen von unbehandeltem Meerwasser (41);
ein erstes Kanalsegment (44(a)) zum Aufnehmen von unbehandeltem Meerwasser aus dem wenigstens einen Einlasssieb;
ein zweites Kanalsegment (44(b)) zum Aufnehmen von unbehandeltem Meerwasser aus dem ersten Kanalsegment, wobei das System derart angeordnet ist, dass sich das Fluid durch das erste Segment bewegt, bis es gefüllt ist, wobei es sich zu diesem Zeitpunkt über den zweiten Kanal ergießt;
eine membranlose hydrodynamische Abscheidereinheit, die mit einem Einlass konfiguriert ist, um das unbehandelte Meerwasser aus dem zweiten Kanalsegment aufzunehmen, wobei der membranlose hydrodynamische Abscheider wenigstens ein Abscheidermodul (50) zum Entfernen von bioorganischem Material aus dem unbehandelten Meerwasser aufweist, wobei das Abscheidermodul eine gewölbte Konfiguration mit wenigstens einem gewölbten Teil hat, der einen Winkelabstand zwischen 180 Grad und 360 Grad entlang von dessen Durchmesser überspannt, was zu einem gabelförmigen Auslass führt, der für das Hindurchführen von behandeltem Abfluss (52) zu einem stromabwärts gelegenen Filtersystem und für die Entfernung von Abfallfluid (54) wirksam ist; wobei das System so angeordnet ist, dass das gesiebte Meerwasser durch die Kanalsegmente und den hydrodynamischen Abscheider durch hydrostatische Kräfte getrieben wird; und
eine Einrichtung zum Zurückführen des Abfallfluids zur Quelle (56).

2. System nach Anspruch 1, wobei das System des Weiteren eine Quelle aus wenigstens einem Koagulationsmittel oder einem Flockungsmittel aufweist.

3. System nach einem der vorhergehenden Ansprüche, wobei die hydrodynamische Abscheidereinheit eine Vielzahl von gewölbten Partikeltrennmodulen aufweist, die derart gestapelt sind, dass die Module parallel miteinander und alle Module mit dem Einlass wirksam verbunden sind.

4. System nach Anspruch 3, wobei die Abscheidereinheit wenigstens eine zweite Vielzahl von gestapelten, gewölbten Partikeltrennmodulen aufweist, die parallel mit der Vielzahl von gestapelten, gewölbten Partikeltrennmodulen angeordnet ist, wobei die Abscheidereinheit vorzugsweise 4 Türme in einer eng gepackten Konfiguration aufweist, die eine einzelne Arbeitseinheit bilden.

5. System nach Anspruch 4, wobei die Abscheidereinheit 6 gestapelte parallele Trennmodule in einer Turmkonfiguration aufweist, wobei die Abscheidereinheit vorzugsweise 4 Türme in einer eng gepackten Konfiguration aufweist, die eine einzelne Arbeitseinheit bilden.

6. System nach Anspruch 5, wobei die Abscheidereinheit eine Vielzahl von Arbeitseinheiten in eng verpackter Konfiguration aufweist.

7. System nach einem der vorhergehenden Ansprüche, wodurch das System als ein Vorbehandlungssystem für ein Onshore- oder Offshore-Filtersystem realisiert wird.

8. Verfahren zur Vorbehandlung von Meerwasser mit:
Bereitstellen eines hydrodynamischen Vorbehandlungs-Abscheidersystems für die Entfernung von Bioorganismen aus einer Quelle von unbehandeltem Meerwasser;
Zirkulieren des unbehandelten Meerwassers durch das hydrodynamische Vorbehandlungs-Abscheidersystem, um einen Abflussstrom und einen Abfallstrom abzugeben;
Hindurchführen des Abflussstroms zu dem Meerwasser-Filtersystem, das sich stromabwärts des hydrodynamischen Vorbehandlungs-Abscheidersystems befindet; und
Filtern des Abflussstroms, um Restabfall zu entfernen;
wobei ein derartiges hydrodynamisches Vorbehandlungs-Abscheidersystem aufweist:
wenigstens ein Einlasssieb (42) zum Aufnehmen von unbehandeltem Meerwasser (41); und
ein erstes Kanalsegment (44(a)) zum Aufnehmen von unbehandeltem Meerwasser aus dem wenigstens einen Einlasssieb;
ein zweites Kanalsegment (44(b)) zum Aufnehmen von unbehandeltem Meerwasser aus dem ersten Kanal, wobei sich das Fluid durch das erste Segment bewegt, bis es gefüllt ist, wobei es sich zu diesem Zeitpunkt über den zweiten Kanal ergießt;
eine membranlose hydrodynamische Abscheidereinheit, die mit einem Einlass konfiguriert ist, um das unbehandelte Meerwasser aus dem zweiten Kanalsegment aufzunehmen, wobei der membranlose hydrodynamische Abscheider bioorganisches Material aus dem unbehandelten Meerwasser entfernt, wobei die Abscheidereinheit wenigstens ein Modul (50) aufweist, das eine gewölbte Konfiguration mit wenigstens einem gewölbten Teil hat, der einen Winkelabstand zwischen 180 Grad und 360 Grad entlang von dessen Durchmesser überspannt, was zu einem gabelförmigen Auslass führt, um den Abflussstrom (52) und den Abfallstrom (54) abzugeben, wobei der Abfallstrom zur Quelle (56) zurückgeführt wird und wobei das gesiebte Meerwasser durch die Kanalsegmente und den hydrodynamischen Abscheider durch hydrostatische Kräfte getrieben wird.

9. Verfahren nach Anspruch 8, das des Weiteren das Einführen von wenigstens einem Koagulationsmittel oder einem Flockungsmittel in das hydrodynamische Vorbehandlungs-Abscheidersystem umfasst.

10. Verfahren nach Anspruch 8 oder Anspruch 9, wobei das bioorganische Material Phytoplankton, Algen, Kieselalgen, Meerwasserorganismen und TEP umfasst.

11. Verfahren nach einem der Ansprüche 8 bis 10, wobei das hydrodynamische Vorbehandlungs-Abscheidersystem im Schergeschwindigkeitsbereich von 100/s bis 1500/s arbeitet.

12. Verfahren nach einem der Ansprüche 8 bis 11, wobei die Abscheidereinheit, die wenigstens ein Modul mit einer gewölbten Konfiguration aufweist, bewirkt, dass die Meeresorganismen in Bänder innerhalb des Moduls konzentriert werden, bevor sie aus dem System als Teil eines Abfallstroms entfernt werden, wobei dadurch ein Zellbruch und die Freigabe von unerwünschten Giftstoffen oder Nebenprodukten in die unbehandelte Meerwasserumgebung beseitigt werden.

## Revendications

1. Système de prétraitement d'eau de mer pour le retrait de matière bio-organique d'une source d'eau de mer brute, le système comprenant :
au moins un tamis d'entrée (42) pour recevoir l'eau de mer brute (41) ;
un premier segment de canal (44(a)) pour recevoir l'eau de mer brute du au moins un tamis d'entrée ;
un second segment de canal (44(b)) pour recevoir l'eau de mer brute du premier segment de canal, le système étant agencé de sorte que le fluide se déplace à travers le premier segment jusqu'à ce qu'il soit rempli, à chaque fois qu'il déborde sur le second canal ;
une unité de séparation hydrodynamique sans membrane configurée avec une entrée pour recevoir l'eau de mer brute du second segment de canal, le séparateur hydrodynamique sans membrane comprenant au moins un module de séparateur (50) pour retirer la matière bio-organique de l'eau de mer brute, le module de séparateur ayant une configuration incurvée comprenant au moins une partie incurvée qui couvre entre 180 degrés et 360 degrés de distance angulaire le long de son diamètre, menant à une sortie bifurquée opérationnelle pour faire passer un effluent traité (52) vers un système de filtration en aval et pour le retrait du fluide résiduaire (54) ; le système étant agencé de sorte que l'eau de mer tamisée est entraînée à travers les segments de canal et le séparateur hydrodynamique par des forces hydrostatiques ; et
un moyen pour ramener le fluide résiduaire à la source (56).

2. Système selon la revendication 1, dans lequel le système comprend en outre une source d'au moins l'un parmi un coagulant et un floculant.

3. Système selon l'une quelconque des revendications précédentes, dans lequel l'unité de séparateur hydrodynamique comprend une pluralité de modules de séparation de particules incurvés empilés de sorte que les modules sont parallèles entre eux et tous les modules sont raccordés de manière opérationnelle à l'entrée.

4. Système selon la revendication 3, dans lequel l'unité de séparateur comprend au moins une seconde pluralité de modules de séparation de particules incurvés empilés agencés parallèlement à la pluralité de modules de séparation de particules incurvés empilés, de préférence dans lequel l'unité de séparateur comprend 4 tours en configuration très condensée formant une seule unité de fonctionnement.

5. Système selon la revendication 4, dans lequel l'unité de séparateur comprend 6 modules de séparateur parallèles empilés dans une configuration de tour, de préférence dans lequel l'unité de séparateur comprend 4 tours dans une configuration très condensée formant une seule unité de fonctionnement.

6. Système selon la revendication 5, dans lequel l'unité de séparateur comprend une pluralité d'unités de fonctionnement en configuration très condensée.

7. Système selon l'une quelconque des revendications précédentes, moyennant quoi le système est mis en oeuvre sous la forme d'un système de prétraitement pour un système de filtration terrestre ou marin.

8. Procédé pour le prétraitement de l'eau de mer comprenant les étapes consistant à :
prévoir un système de séparation de prétraitement hydrodynamique pour le retrait des bio-organisme d'une source d'eau de mer brute ;
faire circuler l'eau de mer brute dans le système de séparation de prétraitement hydrodynamique pour fournir un flux d'effluent et un flux résiduaire ;
faire passer le flux d'effluent par le système de filtration d'eau de mer qui est en aval du système de séparation de prétraitement hydrodynamique ; et
filtrer le flux d'effluent pour retirer des déchets résiduels ;
un tel système de séparation de prétraitement hydrodynamique comprenant :
au moins un tamis d'entrée (42) pour recevoir de l'eau de mer brute (41) ; et
un premier segment de canal (44 (a)) pour recevoir l'eau de mer brute du au moins un tamis d'entrée ;
un second segment de canal (44(b)) pour recevoir l'eau de mer brute du premier canal, dans lequel le fluide se déplace à travers le premier segment jusqu'à ce qu'il soit rempli, à chaque fois qu'il déborde sur le second canal ;
une unité de séparation hydrodynamique sans membrane configurée avec une entrée pour recevoir l'eau de mer brute du second segment de canal, le séparateur hydrodynamique sans membrane étant prévu pour retirer la matière bio-organique de l'eau de mer brute, l'unité de séparateur comprenant au moins un module (50) ayant une configuration incurvée comprenant au moins une partie incurvée qui couvre entre 180 degrés et 360 degrés de distance angulaire le long de son diamètre, menant à une sortie bifurquée pour fournir le flux d'effluent (52) et le flux résiduaire (54), dans lequel le flux résiduaire est ramené à la source (56) et dans lequel l'eau de mer tamisée est entraînée à travers les segments de canal et le séparateur hydrodynamique par des forces hydrostatiques.

9. Procédé selon la revendication 8, comprenant en outre l'étape consistant à introduire au moins l'un parmi un coagulant et un floculant dans le système de séparation de prétraitement hydrodynamique.

10. Procédé selon la revendication 8 ou la revendication 9, dans lequel la matière bio-organique comprend du phytoplancton, des algues, des diatomées, des organismes d'eau de mer et TEP.

11. Procédé selon l'une quelconque des revendications 8 à 10, dans lequel le système de séparation de prétraitement hydrodynamique fonctionne dans une plage de vitesse de rupture de 100/s à 1500/s.

12. Procédé selon l'une quelconque des revendications 8 à 11, dans lequel l'unité de séparateur comprenant au moins un module ayant une configuration incurvée amène les organismes marins à être concentrés dans des bandes à l'intérieur du module avant d'être retirés du système en tant que partie d'un flux résiduaire, éliminant ainsi la rupture cellulaire et la libération des toxines indésirables ou des sous-produits dans l'environnement d'eau de mer brute.
